# EUROPÄISCHE PATENTSCHRIFT

(11) **EP 0 558 708 B1**
(45) Veröffentlichungstag und Bekanntmachung des Hinweises auf die Patenterteilung: **28.02.1996**
(21) Anmeldenummer: 92918659.1
(22) Anmeldetag: 09.09.1992
(51) Int. Cl.: A61C 15/02

(54) **ZAHNREINIGER**
TOOTH CLEANER
INSTRUMENT DE NETTOYAGE DES DENTS

(30) Priorität: 23.09.1991 CH 2823/91
(43) Veröffentlichungstag der Anmeldung: 08.09.1993
(73) Patentinhaber: LENZ APPARATEBAU AG, CH-9203 Niederwil (CH)
(72) Erfinder: LENZ, Alex, CH-9203 Niederwil (CH)
(74) Vertreter: Feldmann, Clarence Paul
(86) Internationale Anmeldenummer: CH9200184
(87) Internationale Veröffentlichungsnummer: WO9305726

(56) Entgegenhaltungen:
- CH-A- 671 331
- DE-C- 55 032
- DE-C- 387 905
- GB-A- 461 035

## Beschreibung

Die Erfindung betrifft einen Zahnreiniger gemäß dem ersten Teil von Anspruch 1.

Ein derartiger Zahnreinger ist aus der DE-C-55 032 bekannt.

Für die Zahnreinigung kennt man im wesentlichen drei Tätigkeiten:
- das Putzen der Zähne mit Zahnbürste
- das Reinigen der Zähne durch Instrumente des Zahnarztes sowie
- das Entfernen von Speiseresten mit Zahnstocher
Der Zahnarzt verfügt über eine Vielzahl von Reinigungshilfsmittel, wie Nadel, Hakennadel, Metall- oder Plastikblattreiniger, Zahnfaden usw., sodass er für jeden spezifischen Reinigungseinsatz ausgerüstet ist. Seine Werkzeuge sind aber fast ausnahmslos für die Anwendung an Dritten und nicht an sich selbst konzipiert.

Das Putzen der Zähne im Sinne der täglichen Hygienepflege geschieht mit der Zahnbürste. Schwer zugängliche Speisereste werden mit Zahnfaden resp. Zahnseide entfernt. Da dies in der Regel in der privaten Intimität geschieht, bleibt die Handhabung dem Einzelnen überlassen. Es gibt dazu keine Umgangsregeln. Irgendwie behilft man sich schon, wobei oft auch Nadeln mit der Gefahr der Verletzung verwendet werden. Wegen der Vielfalt an individuellen Zahnstellungen konnte sich für die Entfernung von Speiseresten kein Hilfsmittel durchsetzen, obwohl der Wunsch für einen gut funktionierenden Zahnstocher wohl so alt ist, wie der Kulturmensch.

Völlig unbefriedigend ist das Zahnstochern in öffentlichen Verpflegungsstätten bzw. an der Öffentlichkeit. Es konnten sich bis heute keine verbindlichen Umgangsregeln entwickeln. Vielerorts werden in der Art zugespitzte Zündhölzer auf dem Speisetisch angeboten, sodass stumm zu erkennen gegeben wird, hier darf in den Zähnen gestochert werden. Für viele ist dabei aber das Problem nicht gelöst, denn bei ungünstigen Zahnstellungen verlangt der klassische Zahnstocher eine besondere Arbeitstechnik am offenen Mund, die für andere Anwesende abstossend sein kann.

In der Mehrzahl der Problemfälle ist eine rundliche Spitze des Zahnstochers nicht das geeignete Reinigungswerkzeug.
Der Anmelder hat mit Modell Nr. 109754 einen blattförmigen Zahnstocher entwickelt, der in Bezug auf die Zahnreinigung an sich wohl die vielfältigste Verwendung ermöglicht. Das Halten eines blossen Blattes und das Arbeiten damit ist jedoch schwierig, sodass auch damit die Zahnreinigung noch nicht befriedigend gelöst ist.

In der Europäischen Patentanmeldung Nr. 12 228 sind eine Anzahl besonderer Formen von blattförmigen Klingen dargestellt, welche an resp. in einem Halter befestigt sind. Es wird in der Druckschrift vorgeschlagen, die Klingen als ganzes Bündel in einem Magazin zu speichern oder diese dolchartig an den Griff aufzusetzen resp. einzuschieben. Hier besteht aber das gleiche Problem wie beim Zahnstocher. Seine öffentliche Anwendung würde für schwierige Fälle als nicht den guten Sitten entsprechend abgelehnt werden. Eine grössere Verbreitung etwa wie bei den bekannten Nagelkluppern war deshalb nicht möglich.

Der Erfinder stellte sich nun die Aufgabe einen Zahnreiniger zu entwickeln, der die Nachteile der bisher bekannten Instrumente nicht aufweist, in der überwiegenden Zahl der Zahnstellungen eine leichte Reinigung erlaubt und dies in einer Art, die den gewohnten Anstandsregeln Rechnung trägt, gleichsam das Entfernen von Speiseresten in einer gewissen Diskretion erlaubt.

Diese Aufgabe wird durch den Zahnreinger gemäß Anspruch 1 gelöst.

Bei einer ganz besonders vorteilhaften Ausgestaltung ist die Reinigungsklinge für eine Gebrauchsstellung in verschiedene Winkellagen zum Etui bringbar und vollständig in das Etui einschiebbar ist.

Nur von einem bestimmten Alter an können sich die Menschen an das Problem der unsauberen oder angerissenen Fingernägel erinnern, die öffentlich zu pflegen als unanständig galt, abgesehen davon, dass die vielen dafür vorhandenen Scheren usw. nicht mitgeführt wurden. Der Nagelklupper konnte hier einen oft als unangenehm empfundenen Zustand beseitigen. Der Nagelklupper findet sich denn auch bald in jedermanns Tasche.

Mit dem neuen Zahnreiniger ist nun tatsächlich das "Ei des Kolumbus" für die Entfernung von lästigen Speiseresten zwischen den Zähnen gefunden worden.

Ergreift man wie üblich einen feinen Gegenstand, zum Beispiel eine Nadel, zwischen Zeigefinger und Daumen und betrachtet dabei die Hand in leicht geschlossener Stellung, dann bilden Zeigefinger und Daumen zusammen zu der restlichen Hand eine Art Winkel. Genau dieser Umstand macht sich die Erfindung zunutze, indem die Reinigungsklinge und das Etui als zwei aneinander gelenkte Elemente ausgebildet werden, derart, dass beim Gebrauch die Reinigungsklinge mit den Fingerspitzen von Zeigefinger und Daumen und das Etui in der übrigen Hand gehalten werden. Man hält so den Zahnreiniger "versteckt" in der Hand mit der Kraft die erforderlich ist. Damit kann die Reinigungsklinge mit "Fingerspitzengefühl" zwischen die Zähne geführt werden und so völlig diskret auch schwierig zugängliche Speisereste mit der an sich sehr optimalen dünnen Blattform "umfallfrei" entfernt werden. Die Reinigungsklinge kann nun aus einem bisher nicht für möglich gehaltenen dünnen Blatt gebildet werden, da das Blatt bis wenige Millimeter vor dem Zahneingriff gehalten
wird. Es kommt hinzu, dass in den Fingerspitzen nicht nur ein phänomenales Tastgefühl vorhanden ist, sondern zusätzlich und in Kombination die Finger eine Beweglichkeit aufweisen , wie sie sonst nur an wenigen menschlichen Körperteilen zum Beispiel der Zunge gegeben ist. Die Reinigung erfolgt mit einer blattartigen Spitze mit der grösstmöglichen Sensorik, sodass der Vorgang schnell, effizient und diskret durchführbar ist.

Erfindungsgemäß weist, die Nietverbindung des Zahnreingers zwei vergrösserte Klemmflächen auf, welche für die Reinigungsklinge beidseits des Etuis eine Drehfläche bilden. Damit kann mit Zeigefinger und Daumen die Reinigungsklinge über die Drehfläche mühelos aus dem Etui herausgedreht werden, ohne dass die Klinge wie bei Sackmessern etwa mit den Fingernägeln herausgezogen werden muss.

Sehr vorteilhaft ist es ferner, wenn die Reinigungsklinge aus einem dünnen Halteblatt mit konstantem Querschnitt besteht und am äusseren Ende eine Reinigungsnase aufweist. Dabei steht die Reinigungsnase etwa um die Breite von einem Zahn vor. Ferner ist es günstig, wenn das Halteblatt zusätzlich Finger-Griffstellen aufweist.

Damit der neue Zahnreiniger besonders auch als Reisebegleiter verwendbar, und zum Beispiel mühelos im Gilet-Täschchen aufbewahrbar ist, wird auch das Etui bevorzugt blattförmig ausgebildet, wobei es in Breite und Länge etwa einem Kleinfinger entsprechen kann.

Für die Form des Etuis bleibt für die Phantasie enormer Spielraum. Es kann die Form eines Rechteckes, eines Herzens, eines Wassertropfens usw. annehmen. Das Etui selbst kann aus Plastik oder Metall hergestellt sein. Vorzugsweise wird jedoch die Klinge aus Federstahl hergestellt und oberflächenvergoldet, damit höchsten hygienischen Anforderungen genügt werden kann, und der neue Reiniger nicht als Wegwerf- sondern als persönlicher Gebrauchsartikel bewahrt wird.

Es ist ferner möglich, den Zahnreiniger in Kombination mit einer Nagelreinigungsspitze oder einem Nagelfeilblatt oder einer Nagelfeilstelle vorzugsweise auf dem Etui zu verwenden. Für eine Ausführung, die nur geringeren hygienischen Anforderungen genügen muss, kann der Zahnreiniger sogar an einem Nagelklupper angelenkt und der Nagelklupper als Etui verwendet werden.

In jedem Fall wird vorgeschlagen, für den Zahnreiniger eine vergoldete Dauerklinge zu verwenden, das Etui aus Metall oder Kunststoff herzustellen, sodass es als ganzes in kochendem Wasser wiederholt reinigbar ist.

In der Folge wird die Erfindung an Hand einiger Figuren mit weiteren Einzelheiten erläutert.

Es zeigen:
- die Figur 1: den Zahnreiniger beim von Handöffnen
- die Figur 2 A-F: verschiedene Winkelstellungen der Reinigungsklinge
- die Figur 3/4: den Zahnreiniger wie er für die Reinigung bevorzugt gehalten wird, die Figur 3 mit der rechten Hand, die Figur 4 mit der linken Hand
- die Figur 5 A,B,C: je eine Ansicht von oben, unten und der Seite.

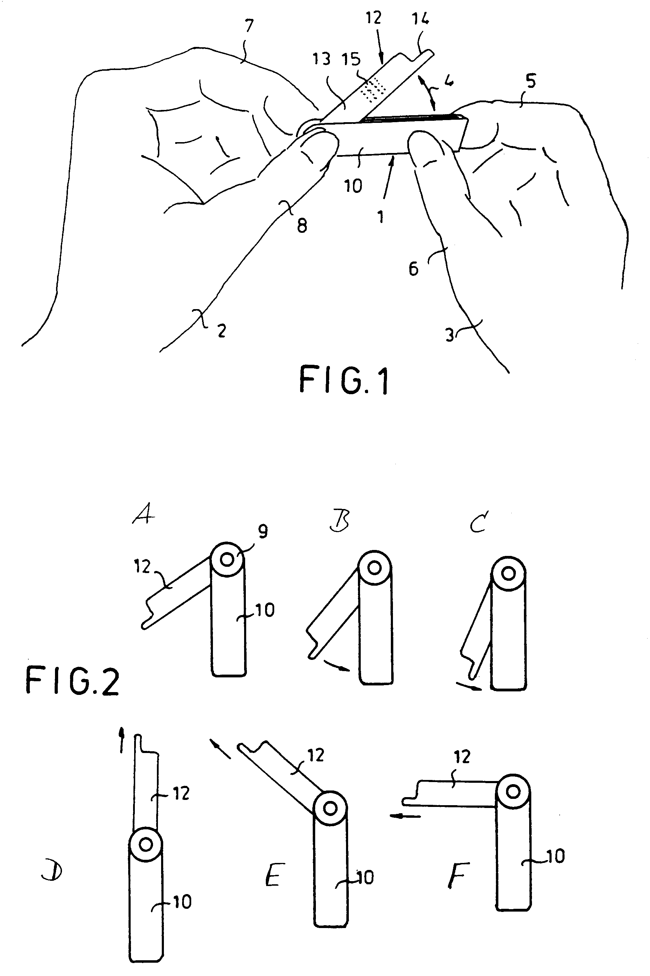

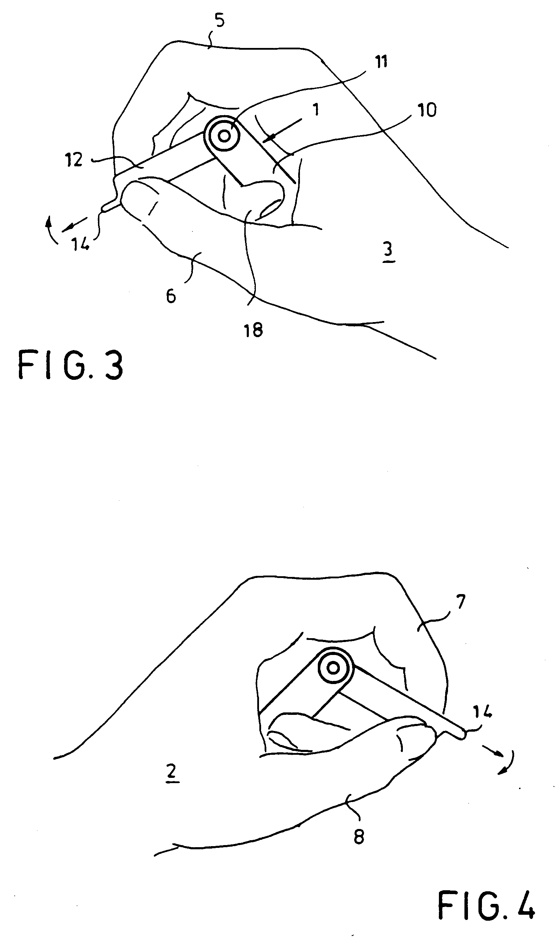

In der Folge wird nun auf die Figuren 1 und 2A bis 2F Bezug genommen.

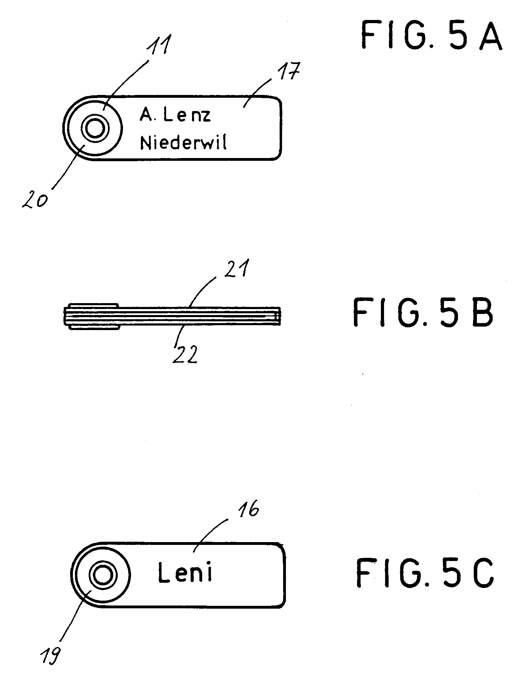

In Figur 1 ist ein Zahnreiniger 1 mit einer linken Hand 2 sowie einer rechten Hand 3 gehalten, und zeigt die Öffnungsbewegung gemäss Pfeil 4. Der Zahnreiniger wird mit dem Zeigefinger 5 sowie dem Daumen 6 der rechten Hand gehalten. Zeigefinger 7 sowie Daumen der linken Hand 2 fassen dazu an einer Drehfläche 9 an, welche drehbar in ein Etui 10 durch eine Nietverbindung 11 in dem Etui 10 zusammen mit einer damit drehfest verbundenen Reinigungsklinge 12 gehalten ist. Die Reinigungsklinge 12 besteht aus einem Halteblatt 13 sowie einer Reinigungsspitze bzw. Reinigungsnase 14, welche zur Reinigung der Zahnlücke bestimmt ist. Auf dem Halteblatt 13 sind zusätzliche Fingergriffstellen 15 angebracht, welche zum Beispiel auch eine blosse rauhe Stelle sein kann. Die Reinigungsklinge 12 wird bevorzugt aus dünnem Federstahlblech von 0,05 - 0,2 Milimetern Dicke hergestellt, welche vor dem Einbau oberflächenvergoldet wird. Das Gold hat die Eigenschaft, dass die Klinge nicht korrodiert und die besten Voraussetzungen gibt für eine maximale Hygiene. Das Etui kann dagegen aus Kunsstoff oder Metall gefertigt werden. Interessant ist ferner, das Etui beidseitig mit glatten Druck-Flächen 16 resp. 17 zu versehen, sodass zum Beispiel auf der einen Seite zum Beispiel der Markennahme Leni und auf der anderen Seite der Name des Besitzers A. Lenz aufprägbar ist (siehe Figur 5A, 5B).

Die Figuren 2D, E und F zeigen 3 verschiedene Arbeitsstellungen der Reinigungsklinge 12 gegenüber dem Etui 10.

Die Figuren 2A, B und C zeigen 3 verschiedene Stellungen der Klinge beim Einschieben der Reinigungsklinge 12 in das Etui 10.

In der Figur 3 ist der Zahnreiniger 1 in der Haltestellung für das Entfernen von Speiseresten zwischen den Zähnen dargestellt. Der Zeigfinger 5 sowie der Daumen 6 halten die Reinigungsklinge 12 in dem Bereich der Fingergriffstellen nahe der Reinigungsnase 14.

Die Reinigungsklinge wird so ganz nahe an der Zahnstocherspitze 14 gehalten, was ermöglicht, die Reinigungsklinge aus ganz dünnem Federstahlblech herzustellen.

Das Etui wird in der Hand festgehalten, was mit dem Mittelfinger 18 dargestellt ist.

In Analogie zu der Figur 3 ist in Figur 4 die linke Hand in Stocherhaltung gezeigt.

In den Figuren 5A und 5B erkennt man die Nietverbindung 11, welche beidseits durch je eine Drehfläche 19 resp. 20 aufweist, welche für das Anfassen mit den Fingerspitzen bestimmt sind.

Das Etui 10 besteht aus 2 Deckhüllen 21 resp. 22 zwischen welchen die Reinigungsklinge einschiebbar ist.

## Patentansprüche

1. Zahnreiniger mit einer blattförmig ausgebildeten Reinigungsklinge (12) und einem als Etui (10) ausgebildeten Halter zur Aufnahme der Reinigungsklinge, wobei die Reinigungsklinge über eine Nietverbindung (11) drehbeweglich am Halter befestigt ist, dadurch gekennzeichnet, dass die Nietverbindung zwei vergrösserte Klemmflächen aufweist, welche für die Reinigungsklinge beidseitig des Etuis eine Drehfläche bilden.

2. Zahnreiniger nach Patentanspruch 1, dadurch gekennzeichnet, dass die Reinigungsklinge für eine Gebrauchsstellung in verschiedene Winkellagen zum Etui bringbar und vollständig in das Etui einschiebbar ist.

3. Zahnreiniger nach Patentanspruch 1, dadurch gekennzeichnet, dass die Reinigungsklinge aus einem Halteblatt mit etwa konstantem Querschnitt besteht und am äusseren Ende eine Reinigungsnase (14) aufweist.

4. Zahnreiniger nach Patentanspruch 3, dadurch gekennzeichnet, dass die Reinigungsnase etwa um die Breite von einem Zahn vorsteht.

5. Zahnreiniger nach den Patentansprüchen 3 oder 4, dadurch gekennzeichnet, dass das Halteblatt Finger-Griffstellen (15) aufweist.

6. Zahnreiniger nach einem der Patentansprüche 1 bis 5, dadurch gekennzeichnet, dass das Etui blattförmig ausgebildet und in Breite und Länge etwa einem Kleinfinger entspricht.

7. Zahnreiniger nach einem der Patentansprüche 1 bis 6, dadurch gekennzeichnet, dass er in Kombination eine Nagelreinigungsspitze oder ein Nagelfeilblatt oder eine Nagelfeilstelle vorzugsweise auf dem Etui oder ein Nagelklupper aufweist.

8. Zahnreiniger nach einem der Patentansprüche 1 bis 7, dadurch gekennzeichnet, dass er als Dauerklinge verwenbar, eine vorzugsweise vergoldete Reinigungsklinge aufweist, das Etui aus Metall oder Kunststoff besteht, sodass er als ganzes in kochendem Wasser wiederholt reinigbar ist.

9. Zahnreiniger nach einem der Patentansprüche 1 bis 8, dadurch gekennzeichnet, dass der Zahnreiniger für eine Gebrauchsstellung in eine Winkellage von Reinigungsklinge und Etui bringbar ist, derart, dass das Etui zwischen Mittelfinger und Handfläche und die Reinigungsklinge mit Zeigfinger und Daumen haltbar ist.

## Claims

1. A tooth cleaner with a foil-like cleaning blade (12) and a holder constructed as a case (10) for receiving the cleaning blade, which is fixed to the holder in rotary manner by means of a rivetted joint (11), characterised in that the rivetted joint has two enlarged clamping surfaces, which form a surface of revolution on both sides of the case for the cleaning blade.

2. A tooth cleaner according to claim 1, characterised in that the cleaning blade can be brought into different angular positions relative to the case for use and can be completely inserted in the latter.

3. A tooth cleaner according to claim 1, characterised in that the cleaning blade comprises a holding blade with an approximately constant cross-section and on the outer end has a cleaning nose (14).

4. A tooth cleaner according to claim 3, characterised in that the cleaning nose projects approximately by the width of one tooth.

5. A tooth cleaner according to claims 3 or 4, characterised in that the holding foil has finger gripping points (15).

6. A tooth cleaner according to any one of the claims 1 to 5, characterised in that the case has a foil-like construction and its width and length approximately correspond to a small finger.

7. A tooth cleaner according to any one of the claims 1 to 6, characterised in that it has in combination a nail cleaning tip or a nail filing blade or a nail filing position, preferably on the case, or a nail clipper.

8. A tooth cleaner according to any one of the claims 1 to 7, characterised in that it is usable as a permanent blade, has a preferably gilded cleaning blade, and the case is made from metal or plastics so that it can be repeatedly cleaned in boiling water.

9. A tooth cleaner according to any one of the claims 1 to 8, characterised in that the tooth cleaner can be brought into an angular position relative to the cleaning blade and case for use, in such a way that the case can be held between the middle finger and the hand surface and the cleaning blade with the index finger and thumb.

## Revendications

1. Instrument pour nettoyer les dents comprenant une lame de nettoyage (12) et un support réalisé sous la forme d'un étui (10) pour recevoir la lame de nettoyage, sachant que la lame de nettoyage est fixée au support par le biais d'un assemblage rivé (11) de manière à être mobile en rotation, caractérisé en ce que l'assemblage rivé présente deux surfaces de serrage agrandies qui forment de part et d'autre de l'étui une surface de rotation pour la lame de nettoyage.

2. Instrument pour nettoyer les dents selon la revendication 1, caractérisé en ce que la lame de nettoyage en position d'utilisation peut être mise dans différentes positions angulaires par rapport à l'étui et peut être entièrement insérée dans l'étui.

3. Instrument pour nettoyer les dents selon la revendication 1, caractérisé en ce que la lame de nettoyage est composée d'une lame de préhension de section approximativement constante et présente à l'extrémité extérieure un ergot de nettoyage (14).

4. Instrument pour nettoyer les dents selon la revendication 3, caractérisé en se que l'ergot de nettoyage fait saillie sur une distance correspondant à la largeur d'une dent

5. Instrument pour nettoyer les dents selon la revendication 3 ou 4, caractérisé en ce que la lame de préhension présente des zones de positionnement pour les doigts (15).

6. Instrument pour nettoyer les dents selon l'une des revendications 1 à 5, caractérisé en ce que l'étui est réalisé en forme de lame et correspond en termes de longueur et de largeur approximativement à un auriculaire.

7. Instrument pour nettoyer les dents selon l'une des revendications 1 à 6, caractérisé en ce que lui est associé(e) un cure-ongles ou une lime à ongles ou une portion de lime à ongles, laquelle est de préférence située sur l'étui, ou un coupe-ongles.

8. Instrument pour nettoyer les dents selon l'une des revendications 1 à 7, caractérisé en ce qu'il présente une lame de nettoyage de préférence dorée à l'or fin pour lui garantir sa résistance et en ce que l'étui est en métal ou en matière plastique, de sorte que l'ensemble peut être nettoyé de façon répétée dans de l'eau bouillante.

9. Instrument pour nettoyer les dents selon l'une des revendications 1 à 8, caractérisé en ce que la lame de nettoyage et l'étui de l'instrument pour nettoyer les dents peuvent être mis dans différentes positions angulaires l'un par rapport à l'autre pour obtenir une position d'utilisation, et ce, de telle manière que l'étui puisse être maintenu entre le majeur et la paume de la main et la lame de nettoyage, à l'aide de l'index et du pouce.
